# EUROPÄISCHE PATENTSCHRIFT

(11) **EP 1 694 981 B1**
(45) Veröffentlichungstag und Bekanntmachung des Hinweises auf die Patenterteilung: **27.02.2008**
(21) Anmeldenummer: 04802903.7
(22) Anmeldetag: 09.12.2004
(51) Int. Cl.: F16F 13/14

(54) **HYDRAULISCH DÄMPFENDES BUCHSENLAGER**
HYDRAULICALLY DAMPING BUSH BEARING
COUSSINET ASSURANT UN AMORTISSEMENT HYDRAULIQUE

(30) Priorität: 16.12.2003 DE 10359340
(43) Veröffentlichungstag der Anmeldung: 30.08.2006
(73) Patentinhaber: ZF FRIEDRICHSHAFEN AG, 88038 Friedrichshafen (DE)
(72) Erfinder: SIEMER, Hubert, 49413 Dinklage (DE); BURWINKEL, Josef, 49413 Dinklage (DE); LOHEIDE, Stefan, 49134 Wallenhorst (DE); MEYER, Burkhard, 49413 Dinklage (DE)
(86) Internationale Anmeldenummer: PCT/DE2004/002696
(87) Internationale Veröffentlichungsnummer: WO 2005/059398

(56) Entgegenhaltungen:
- DE-A1- 4 117 129
- US-A- 4 840 357
- US-A- 5 172 893
- US-A1- 2002 020 950

## Beschreibung

Die Erfindung betrifft ein hydraulisch dämpfendes Buchsenlager, ein sogenanntes Hydrolager, bei welchem der Hydraulikbereich aus zumindest zwei Kammerpaaren für eine Dämpfung sowohl in radialer als auch axialer Richtung gebildet ist, wobei jedes Kammerpaar aus zumindest zwei getrennten Kammern gebildet wird, welche jeweils über zumindest einen Dämpfungskanal miteinander verbunden sind.

Zur Dämpfung von Schwingungen und zur Aufnahme von Kräften werden Lager unterschiedlichster Bauformen, vornehmlich Gummilager vielfältig eingesetzt. Im Fahrzeugbau dienen sie beispielsweise zur Lagerung von Teilen der Radaufhängung oder der Antriebsaggregate der Fahrzeuge. Dabei ist es bekannt, je nach Einsatzfall die dämpfende Wirkung elastomerer Dämpfungsglieder durch eine hydraulische Dämpfung zusätzlich zu unterstützen. Zur Nutzung des von der Flüssigkeitsmasse hervorgerufenen Tilgereffektes werden in den elastomeren Einsatzteilen beziehungsweise Gummikörpern der Lager Kammern zur Aufnahme eines fluiden Dämpfungsmittels vorgesehen. Die Kammern, deren Größe und Position im Lager von der geforderten Abstimmung abhängt, werden durch einen oder mehrere, in speziellen zusätzlich in das Lager integrierten Formteilen ausgebildete Kanäle strömungsleitend miteinander verbunden. Je nach Beanspruchung des Lagers wird so das Dämpfungsmittel von einer Kammer in eine andere gedrückt. Hierbei sind sowohl Lager bekannt, bei denen die hydraulische Dämpfung in Bezug auf radial in das Lager eingetragene Kräfte genutzt wird als auch solche, bei denen vornehmlich die axiale Dämpfung durch die Dämpfungsflüssigkeit unterstützt wird. Auch Lager bei denen der Tilgereffekt des Dämpfungsmittels in axialer und radialer Richtung genutzt wird sind bekannt.

Ein derartiges Lager ist aus der DE 691 01 803 T2 bekannt, wobei dort zwischen einem Innenteil und einer Außenhülse ein elastomeres Dämpfungsglied angeordnet ist. Innerhalb des elastomeren Dämpfungsgliedes ist ein erstes mit einem Fluid gefülltes Kammerpaar angeordnet, wobei sich die beiden dazugehörigen Kammern an den entgegengesetzten Enden des Lagers befinden und eine frequenzabhängige Dämpfung in axialer Richtung des Lagers bewirken. Zwischen diesem ersten Kammerpaar ist im elastomeren Dämpfungsglied ein zweites Kammerpaar, mit sich radial gegenüberstehenden Kammern, angeordnet, welches für die radiale Dämpfung vorgesehen ist. Über in einem im Inneren des Innenteils vorgesehenen Kanalträger angeordnete Dämpfungskanäle sind die axial wirkenden und die radial wirkendenden Kammern miteinander verbunden. Wesentlicher Nachteil an dieser Ausführung ist die Anordnung des Kanalträgers im Inneren des Innenteils, wodurch die Dämpfungskanäle, und damit die Dämpfungscharakteristik, nur in einem sehr geringen Maße variiert werden können. Weiterhin wirkt sich das insgesamt sehr großvolumige elastomere Dämpfungsglied, insbesondere ist außerhalb der radialen Dämpfungskammern ein sehr breiter elastomerer Bereich zwischen Innenteil und Außenhülse erkennbar, negativ auf die Dämpfungscharakteristik des Lagers aus. Derartige großvolumige Elastomerbereiche beanspruchen einen relativ großen Bauraum und benötigen einen entsprechenden Materialeinsatz, welcher eine erheblichen Kostenaufwand verursacht. Zudem baut dieses Buchsenlager in axialer Richtung, bedingt durch die Anordnung der Kammern, sehr groß auf.

Dokument US-A-5 172 893 zeigt einen Buchsenlager gemäß dem Stand der Technik und enthält die Merkmale des Oberbegriffs des Anspruchs 1.

Aufgabe der Erfindung ist daher, ein hydraulisch dämpfendes Buchsenlager, bei welchem der Hydraulikbereich aus zumindest zwei Kammernpaaren für eine Dämpfung sowohl in radialer als auch axialer Richtung gebildet wird, bereitzustellen, welches einen kompakten Aufbau aufweist und dabei einfach und kostengünstig herzustellen ist.

Die Aufgabe wird erfindungsgemäß durch ein Buchsenlager mit den Merkmalen nach Anspruch 1 gelöst. Vorteilhafte Aus- bzw. Weiterbildungen des Buchsenlagers sind in den Unteransprüchen angeben.

Das erfindungsgemäße Buchsenlager weist ein Innenteil mit einer entlang einer Längsachse verlaufenden Bohrung auf, wobei das Innenteil von einer Außenhülse umgeben wird und zwischen dem Innenteil und der Außenhülse zumindest ein elastomeres Dämpfungsglied vorhanden ist. Weiterhin besteht das Buchsenlager aus zumindest einem ersten und einem zweiten Kammerpaar, wobei jedes Kammerpaar aus zwei getrennten Kammern gebildet wird. Die Kammern des ersten Kammerpaares sind axial entlang der Längsachse des Buchsenlagers angeordnet und die zwei Kammern des zweiten Kammerpaares sind radial zur Längsachse sowie in axialer Richtung zwischen den zwei Kammern des ersten Kammerpaares angeordnet. Die Kammerpaare sind dabei jeweils über zumindest einem Dämpfungskanal, welcher in einem zwischen der Außenhülse und einer außenliegenden Außenbuchse angeordneten Kanalträger vorgesehen ist, verbunden. Erfindungsgemäß sind die Kammern des Buchsenlagers derart angeordnet, dass die Kammern des ersten Kammerpaares und die Kammern des zweiten Kammerpaares sich wenigstens in einem zur Längsachse axialen Teilbereich zumindest bereichsweise überdecken. Demgemäß sind innerhalb einem senkrecht zur Längsachse ausgerichteten Ring entlang einer konzentrisch zum Ring verlaufenden Kreislinie sowohl zumindest Teile von Kammern des ersten Kammerpaares als auch Kammern oder Teile der Kammern des zweiten Kammerpaares hintereinander angeordnet. Durch diese Anordnung kann das benötigte Volumen für die an den axialen Enden angeordneten Kammern in Bereiche zur Mitte des Buchsenlagers hin verlagert werden. Und zwar in genau diejenigen Bereiche, die üblicherweise durch ein Elastomer ausgefüllt werden. So wird mit der vorliegenden Erfindung zum einen ein sehr kompakt aufbauendes, Buchsenlager, insbesondere in axialer Richtung, realisiert und zum anderen werden großvolumige elastomere Bereiche vermieden. Auf diese Weise wird zudem der Materialeinsatz hinsichtlich des Elastomers wesentlich verringert, so dass der Kostenaufwand erheblich gesenkt werden kann. Durch die kompaktere Ausführung der Buchsenlager wird zudem die Möglichkeit geschaffen, in den Vulkanisationswerkzeugen eine größere Anzahl von Vulkanisationsnestern vorzusehen, so dass je Vulkanisationsvorgang eine größere Anzahl von Buchsenlager erzeugt werden kann

Zur Erzeugung eines Anschlages zur Begrenzung der radialen Auslenkung des Innenteils gegenüber der Außenhülse ist in einer vorteilhaften Ausbildung die Anordnung von Vorsprüngen am Innenteil des Buchsenlagers vorgesehen, wodurch zudem das Kammervolumen auf einfache Weise beeinflußt werden kann.

Die Außenhülse, welche das Innenteil und das elastomere Dämpfungsglied umgibt, ist vorteilhafterweise zumindest in Teilbereichen zur Außenbuchse beziehungsweise zu einem zwischen Außenbuchse und Außenhülse angeordneten Kanalträger beabstandet, so dass der zwischen Außenhülse und Außenbuchse oder Außenhülse und Kanalträger vorhandene Raum als Volumen für die an den axialen Enden des Buchsenlagers angeordneten Kammern des ersten Kammerpaares verwendet werden kann. Diese Anordnung gestattet es damit, dass die Kammern des ersten und des zweiten Kammerpaares nicht nur in axialer Richtung unmittelbar, lediglich durch eine dünne Trennwand des elastomeren Dämpfungsgliedes getrennt, benachbart angeordnet sind, sondern auch in einer zur Längsachse parallelen Ebene unmittelbar benachbart angeordnet sein können. Getrennt sind die Kammern des ersten und des zweiten Kammerpaares dabei durch die feste Wand der Außenhülse sowie ggf. einer Schicht des elastomeren Dämpfungsgliedes. Zumindest eine Kammer des ersten Kammerpaares grenzt damit in einer geneigt zu einer senkrecht zur Längsachse liegenden Ebene unmittelbar an eine Kammer des zweiten Kammerpaares.

Zur Trennung der an den axialen Enden des Buchsenlagers angeordneten Kammern des ersten Kammerpaares kann die Außenhülse in einer bevorzugten Ausbildung mit einem Steg versehen sein, der die Außenhülse mit dem Kanalträger oder der Außenbuchse verbindet. Sofern der Kanalträger oder die Außenbuchse zylindrisch ausgebildet sind, ist der Steg in Form eines Kreissegmentes ausgebildet. Dieser Steg trennt die an den axialen Enden des Buchsenlagers angeordneten Kammern des ersten Kammerpaares. Somit sind auch die Kammern des ersten Kammerpaares unmittelbar zueinander benachbart angeordnet und lediglich durch einen Steg getrennt. Sie grenzen aneinander an.

Das Dämpfungsglied kann vorteilhafterweise zweiteilig ausgebildet werden, wobei die beiden Teile des Dämpfungsgliedes in ihrem Kontaktbereich eine Trennebene ausbilden, die senkrecht zur Längsachse des Buchsenlagers ausgebildet ist. Durch diese Teilung des Dämpfungsgliedes kann vorteilhafterweise eine Vorspannung innerhalb des zweiteiligen Dämpfungsgliedes in axialer Richtung erreicht werden. Die Vorspannung wird dabei über die Außenhülse gehalten, wobei die Außenhülse hierzu in einer bevorzugten Ausbildung ebenfalls zweiteilig ausgeführt werden kann. Die beiden Teile der Außenhülse bilden dabei in ihrem Kontaktbereich eine Kontaktzone aus, die sich durch den gesamten Steg hindurch erstreckt. Der Steg ist somit auch zweiteilig ausgeführt. Die Kontaktzone der Außenhülse und die Trennebene der beiden Teile des Dämpfungsgliedes befinden sich in einer gemeinsamen Ebene. Durch die zweiteilige Ausbildung des Dämpfungsgliedes und der Außenhülse wird hinsichtlich verbesserter Montage- und Vulkanisationsbedingungen zudem eine vereinfachte Fertigung des Buchsenlagers erzielt.

In einer zweiten bevorzugten Ausführungsform kann der die Außenhülse mit der Außenbuchse oder dem Kanalträger verbindenden Steg als sein Zusatzelement ausgebildet sein, welches beispielsweise mittels einer Verschraubung oder einer anderen kraft- oder formschlüssigen Verbindung an der Außenhülse befestigt wird. Hierzu ist an dem Zusatzelement senkrecht zum Steg eine Befestigungsplatte mit Bohrungen angeordnet, wobei diese beispielsweise einstückig mit dem Steg ausgebildet sein kann. Mittels diesem Zusatzelement kann die Herstellung des Buchsenlagers weiter vereinfacht werden und zudem eine Vorspannung der beiden Teile des elastomeren Dämpfungsgliedes vorteilhafterweise gezielt aufgebracht und dauerhaft gehalten werden.

Der Kanalträger, in welchem die die Kammern verbindenden Dämpfungskanäle ausgebildet sind, ist besonders vorteilhaft zwischen Außenhülse und Außenbuchse angeordnet. Bedingt durch den relativ großen Durchmesser des Kanalträgers ist es möglich, die verschiedenen Dämpfungskanäle vielfach zu variieren, um so eine wesentlich größere Verschiebung des wirksamen Frequenzbandes zu erzielen. Die Frequenzlagen und die Beträge der Dämpfungsmaxima sind dabei mittels der getrennten Dämpfungskanale für das erste und das zweite Kammerpaar getrennt einstellbar. Wenn der Kanalträger sich in einer bevorzugten Ausbildung zudem über die gesamte axiale Ausdehnung der Außenbuchse erstreckt, wird zudem eine wirksame mechanische Unterstützung der Außenbuchse erzielt, da der Kanalträger einen Teil der wirkenden Kräfte aufnehmen kann. Auf diese Weise kann die Außenbuchse insgesamt für geringere Lasten ausgelegt werden.

Vorteilhaft für den Herstell- und Konstruktionsaufwand als auch für die Gebrauchseigenschaften kann es sein, wenn das Buchsenlager insgesamt wie auch die einzelnen Bauteile zueinander, insbesondere das Innenteil, die Teile der Außenhülse und die Teile des elastomeren Dämpfungsgliedes, symmetrisch ausgebildet werden. Insbesondere durch die symmetrische Ausbildung der Kammern der Kammerpaare kann beispielsweise ein in vorrangig zwei Raumrichtungen abgestimmtes Dämpfungsverhalten erzielt werden. Die Symmetrie bezieht sich dabei auf zwei senkrecht zueinander stehende Ebenen, innerhalb derer sich die Längsachse des Buchsenlagers erstreckt, als auch auf eine Ebene senkrecht zur Längsachse des Buchsenlagers.

Der symmetrische Aufbau des Buchsenlagers begünstigt zudem die Fertigung einer Hydrolagerreihe gemäß einem Baukastensystem. So kann beispielsweise für eine Außenbuchse mit einem festen Außendurchmesser durch die Auswahl verschiedener innerer Bauteile, beispielsweise Kanalträger, Innenteil oder Außenhülse, eine Vielzahl von Buchsenlagern mit unterschiedlichen, an die jeweiligen Anforderungen angepaßten Dämpfungseigenschaften, geschaffen werden.

Weitere, die Erfindung verbessernde Maßnahmen sind in den Unteransprüchen angegeben oder werden nachstehend gemeinsam mit der Beschreibung eines bevorzugten Ausführungsbeispieles der Erfindung anhand der Figuren näher dargestellt. Es zeigt:
- Fig. 1:: das erfindungsgemäße Buchsenlager ohne Außenbuchse und Kanalträger in einer ersten Ausführungsform,
- Fig. 2:: eine Schnittdarstellung entlang des Schnittlinie II- II in der Fig. 1,
- Fig. 3:: eine Schnittdarstellung entlang der Schnittlinie III - III in der Fig. 1,
- Fig. 4:: eine Schnittdarstellung entlang der Schnittlinie IV -IV in der Fig. 3,
- Fig. 5:: das erfindungsgemäße Buchsenlager ohne Außenbuchse und Kanalträger in einer zweiten Ausführungsform,
- Fig. 6:: eine Schnittdarstellung entlang des Schnittlinie VI - VI in der Fig. 5,
- Fig. 7:: eine Schnittdarstellung entlang des Schnittlinie VII - VII in der Fig. 5,
- Fig. 8:: eine Schnittdarstellung entlang des Schnittlinie VIII - VIII in der Fig. 7,
- Fig. 9:: den Kanalträger als Einzelbauteil in einer dreidimensionalen Ansicht.

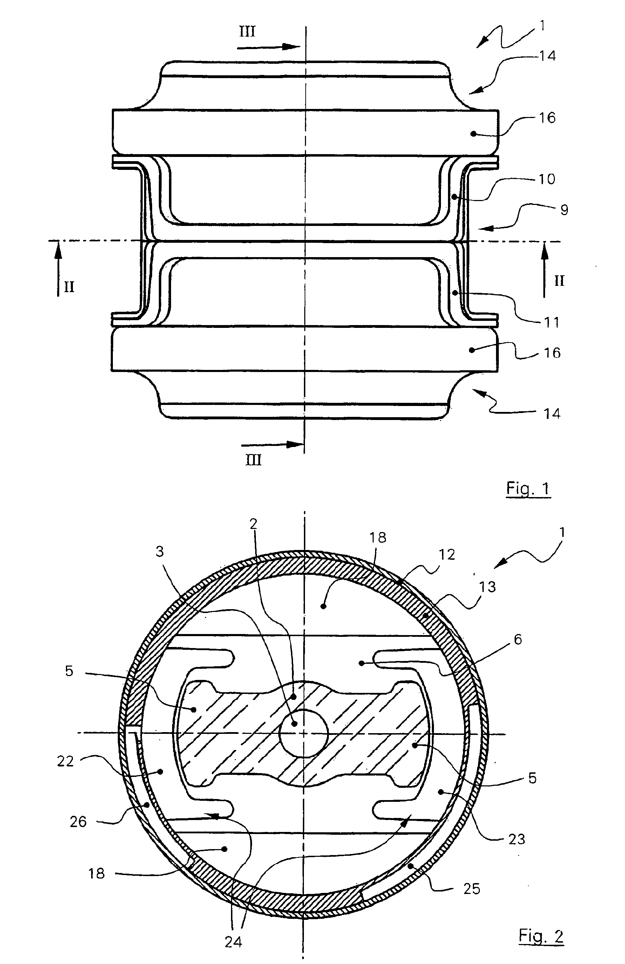

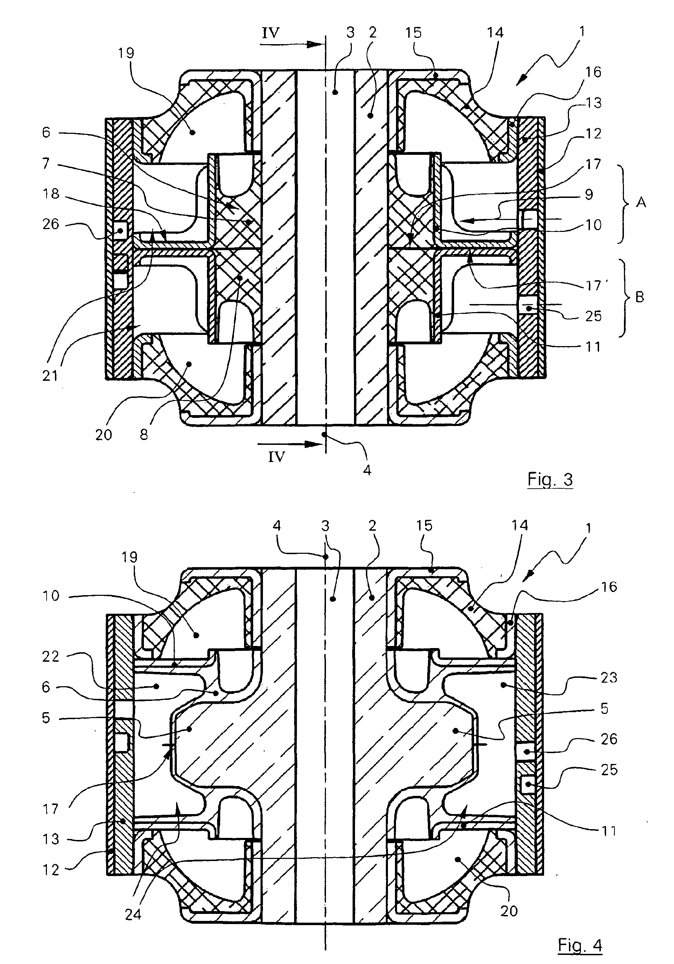

In den Fig. 1 bis 4 ist ein erstes Ausführungsbeispiel eines erfindungsgemäßen Buchsenlagers 1 dargestellt. Das Buchsenlager 1 besitzt ein vorzugsweise metallisches, beispielsweise aus Aluminium bestehendes, Innenteil 2 mit einer durchgehenden zylindrischen Bohrung 3 entlang der Längsachse 4 des Buchsenlagers 1, wobei die Bohrung 3 auch jede andere Form, beispielweise ein Innensechskant, annehmen kann und beispielsweise als eine Sacklochbohrung ausgebildet sein kann. Das Innenteil 2 ist in einem mittleren Bereich des Buchsenlagers 1 mit zwei sich radial gegenüberliegenden und radial nach außen erstreckenden Vorsprüngen 5 versehen, wobei das Innenteil 2 von einem zweiteiligen elastomeren Dämpfungsglied 6 umgeben ist. Das aus einem oberen Dämpfungsteil 7 und einem unteren Dämpfungsteil 8 bestehende elastomere Dämpfungsglied 6 ist an das Innenteil 2 anvulkanisiert und stellt zwei Schub- oder Schubdruckpakete dar, welche innerhalb einer zweiteiligen Außenhülse 9 angeordnet und an diese ebenfalls anvulkanisiert sind, wobei das obere und das untere Außenhülsenteil 10, 11 die Dämpfungsteile 7, 8 zusammendrücken und eine Vorspannung auf das elastomere Dämpfungsglied 6 aufbringen. Die Außenhülse 9 wird von einer Außenbuchse 12 umgeben, wobei zwischen der Außenbuchse 12 und der Außenhülse 9 ein zylindrischer Kanalträger 13 angeordnet ist.

Auf das Innenteil 2 wird an den axialen Endbereichen jeweils ein konisches Gummilager 14 mittels eines inneren Stützringes 15 aufgepresst, wobei das Gummilager 14 mittels eines äußeren Stützringes 16 in die Außenbuchse 12 bzw. den Kanalträger 13 eingesetzt wird, beispielsweise über ein Presspassung.

Das obere und untere Dämpfungsteil bilden in ihrem Kontaktbereich eine Trennebene 17 aus, welche sich mit der Kontaktzone 17' des oberen und des unteren Außenhülsenteils 10, 11 in einer gemeinsamen Ebene befindet. In dem seitlichen Bereich der Vorsprünge 5 des Innenteils 2 weist die Außenhülse 9 einen Abstand zur Außenbuchse 12 bzw. den Kanalträger 13 auf. Etwa in der Mitte des Buchsenlagers 1 ist die Außenhülse 9 daher mit einem Steg 18 versehen, der die Verbindung der Außenhülse 9 zur Außenbuchse 12 bzw. den Kanalträger 13 darstellt. In einer Draufsicht stellt sich der Steg 18 als ein Kreissegment dar (Fig. 2). Der Steg 18 ist in diesem Ausführungsbeispiel wie die Außenhülse insgesamt auch zweiteilig ausgeführt, so dass sich die Kontaktzone 17 in den Steg 18 hinein fortsetzt.

Die an den axialen Enden angeordneten Gummilager 14 bilden zusammen mit dem elastomeren Dämpfungsglied 6 sowie der Außenhülse 9 und, als radiale Begrenzung, mit dem Kanalträger 13 bzw. der Außenbuchse 12 jeweils eine obere und eine untere Kammer 19, 20, welche ein erstes Kammerpaar 21 bilden, das im Bereich der Trennebene 17 durch den Steg 18 voneinander getrennt ist. Im radial äußeren Bereich der Vorsprünge 5 bilden Einformungen in das elastomere Dämpfungsglied 6 zusammen mit der Außenbuchse 12 bzw. dem Kanalträger 13 zwei radiale Kammern 22, 23 aus, die ein zweites Kammerpaar 24 bilden. Die Kammern 19, 20, 22 und 23 sind mit einem hydraulischen Fluid gefüllt.

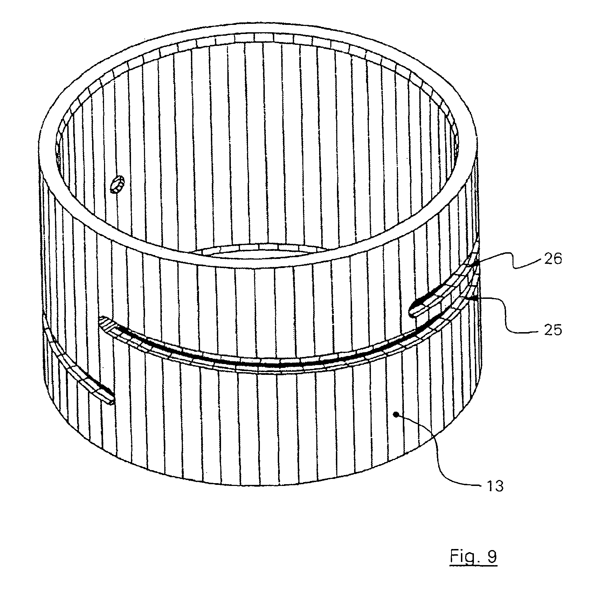

Die beiden Kammern 19, 20 des ersten Kammerpaares 21 sind über einen im Kanalträger 13 angeordneten ersten Dämpfungskanal 25 miteinander verbunden, und die zwei Kammern 22, 23 des zweiten Kammerpaars 24 sind über einen ebenfalls im Kanalträger 13 angeordneten zweiten Dämpfungskanal 26 miteinander verbunden (siehe auch Fig. 9). Das erste Kammerpaar 21 bildet somit eine Dämpfung des Buchsenlagers 1 axial zur Längsachse 4 aus, wohingegen das zweite Kammerpaar 24 eine radiale Dämpfungswirkung des Buchsenlagers 1 bewirkt. Die Anordnung der Dämpfungskanäle 25, 26 in einem radial äußeren Bereich des Buchsenlagers 1 ermöglicht eine große konstruktiv frei wählbare Variation des Dämpfungskanalvolumens zur Beeinflussung der Dämpfungseigenschaften des Buchsenlagers 1.

Der Kanalträger 13 erstreckt sich in der gezeigten Ausführung in axialer Richtung über die gesamte Länge der Außenbuchse 12. Zum einen werden dadurch die Möglichkeiten der Anordnung der Dämpfungskanäle erweitert und zum anderen unterstützt der Kanalträger 13 die Außenbuchse 12, da er einwirkende mechanische Lasten mit tragen kann. In einer weiterführenden Ausführung ist es durchaus denkbar, die Außenbuchse 12 und den Kanalträger 13 als ein gemeinsames Bauteil auszubilden. Alternativ kann der Kanalträger 13 auch radial außerhalb der Außenbuchse 12 angeordnet werden. Hierzu sind dann in der Außenbuchse 12 Durchstoßbohrungen für die Dämpfungskanäle 25, 26 vorzusehen.

Die radial wirkenden Kammern 22, 23 des zweiten Kammerpaares 24 sind nicht über den gesamten Umfang des Buchsenlagers 1 angeordnet, sondern lediglich in einen gewissen begrenzten Abschnitt. Außerhalb dieser Bereiche werden die radial wirkenden Kammern 22, 23 von den axial wirkenden Kammern 19, 20 umgriffen, so dass die Kammern 19, 20 des ersten Kammerpaares 21 und die Kammern 22, 23 des zweiten Kammerpaares 24 in zur Längsachse 4 axialen Teilbereichen A, B sich überdecken. Auf diese Weise wird zumindest ein Teil des Volumens der axial wirkenden Kammern 19, 20 in mittige Bereiche des Buchsenlagers 1 verlagert, wodurch ein sehr kompaktes Buchsenlager 1 entsteht. Unterstützt wird die kompakte Bauart dadurch, dass die axial wirkenden Kammern 19, 20 lediglich durch den Steg 18 voneinander getrennt angeordnet sind. Auch liegen die axial wirkenden Kammern 19, 20 entlang einer zur Längsachse 3 parallelen Ebene unmittelbar benachbart zu den radial wirkenden Kammern 22, 23, wobei diese Ebene in Bezug auf die Längsachse 3 auch durchaus geneigt sein kann. Die axial wirkenden Kammern 19,20 sind von den radial wirkenden Kammern 22, 23 lediglich durch einen Bereich der Außenhülse 9 bzw. einem Bereich des oberen oder unteren Außenhülsenteils 10, 11 sowie eine dünne Schicht des elastomeren Dämpfungsgliedes 6 voneinander getrennt.

Die zweiteilige Ausführung der Außenhülse 9 ermöglicht neben der Aufbringung einer vorteilhaften Vorspannung auf das elastomere Dämpfungsglied 6 auch eine vereinfachte Fertigung wodurch sich der Herstellungsaufwand reduzieren läßt. Durch die Vorspannung auf das elastomere Dämpfungsglied 6 bzw. dem oberen und unteren Dämpfungsteil 7, 8 läßt sich beispielsweise die durch den Vulkanisierungsvorgang eingebrachte Schrumpfspannung reduzieren. Wie aus den Figuren zu erkennen ist, beansprucht das elastomere Dämpfungsglied 6 lediglich ein geringes Volumen, wodurch ein verringerter Materialeinsatz erzielt werden kann.

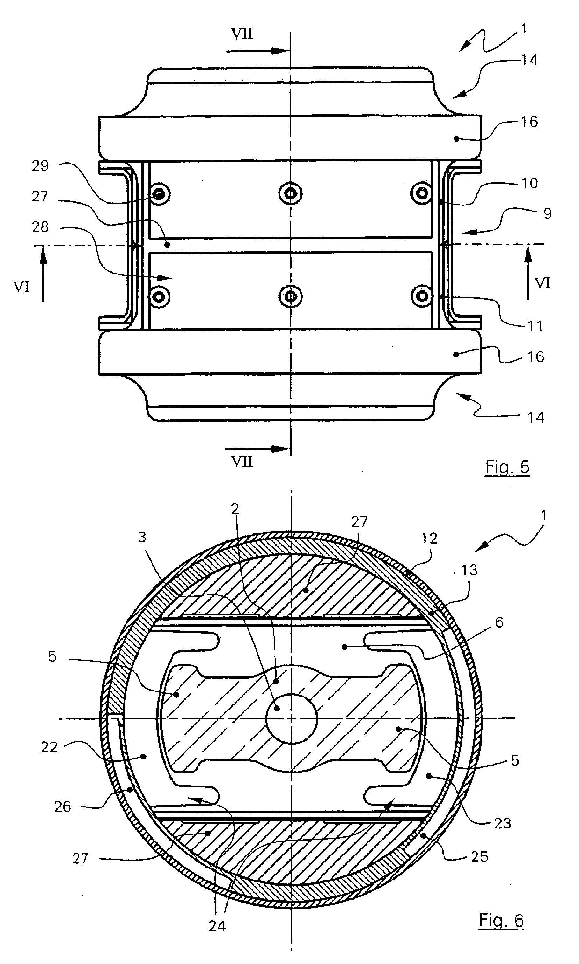

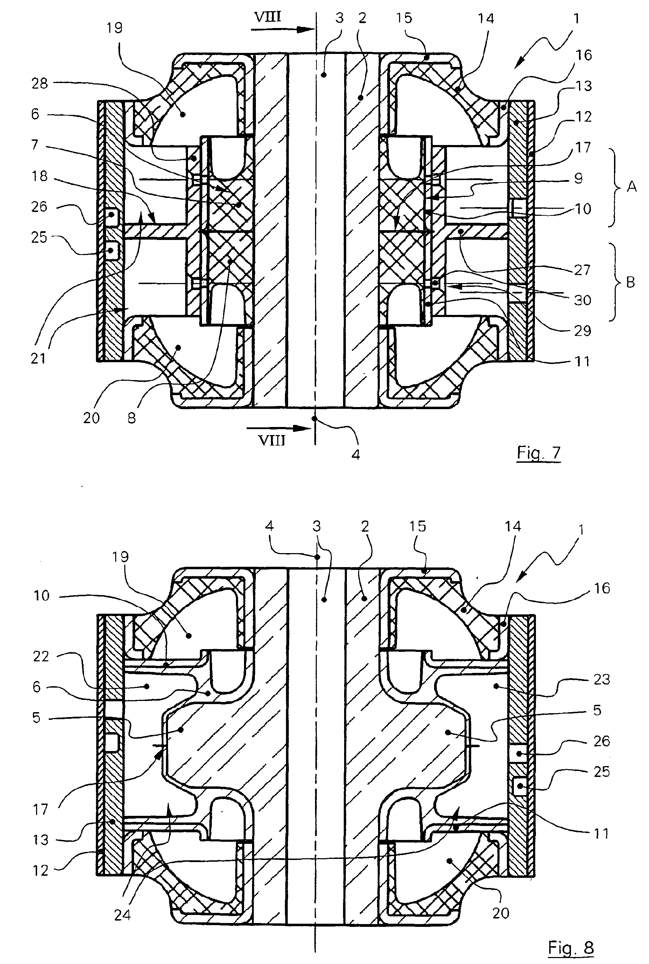

Die in den Fig. 5 bis 8 dargestellte Ausführungsform unterscheidet sich gegenüber der bisher beschriebenen Ausführung lediglich dadurch, dass der Steg 18, welcher in dem ersten Ausführungsbeispiel zweiteilig ausgebildet war, durch ein Zusatzelement 27 ersetzt worden ist. Das Zusatzelement 27 ist auf beiden Seiten des Buchsenlagers 1 kreissegmentförmig ausgebildet und weist eine zu der Trennebene 17 senkrecht stehende Befestigungsplatte 28 auf. Das Zusatzelement 27 ist über eine Verschraubung 29 mit in der Befestigungsplatte 28 angeordneten Bohrungen 30 an der Außenhülse 9 befestigt. Zusatzelement 27 und Befestigungsplatte 28 sind vorzugsweise einstückig ausgebildet. Alternativ zu der Verschraubung 29 kann das Zusatzelement 27 auch mittels weiterer Verbindungsarten an der Außenhülse 9 befestigt werden, beispielsweise mittels einer Clipsverbindung oder einer Nietverbindung.

Mittels des Zusatzelementes 2 wird eine sichere Fixierung der beiden Außenhülsenteile 10, 11 zueinander geschaffen, um die Vorspannung im elastomeren Dämpfungsglied 6 jederzeit gewährleisten zu können. Zudem vereinfacht sich dadurch die Montage, was zu einer weiteren Reduzierung des Fertigungsaufwandes führt.

Das Buchsenlager 1 ist sowohl radial als axial zur Längsachse 4 symmetrisch aufgebaut. Dabei sind alle wesentlichen Bauteile wie das Innenteil 2, das elastomere Dämpfungsglied 6, die Außenhülse 9, die Gummilager 14 sowie die Außenbuchse 12 symmetrisch ausgebildet. Lediglich der Kanalträger 13 weist auf Grund der Ausbildung der Dämpfungskanäle 25, 26 keine vollkommene Symmetrie auf. Die Symmetrie des Buchsenlagers 1 ermöglicht dabei eine gleichmäßige Dämpfungswirkung zumindest in zwei Raumrichtungen. Zudem ergeben sich durch die Symmetrie konstruktive und fertigungstechnische Vorteile, die den Herstellungsaufwand des Buchsenlagers 1 senken.

Der Aufbau des Buchsenlagers 1 ermöglicht zudem die Umsetzung eines Baukastensystems, da alle wesentlichen Bauteile durch gleichartige Bauteile mit anderen Eigenschaften ersetzt werden können. So ist beispielsweise der Kanalträger 13 auf einfache Weise austauschbar gegen einen Kanalträger 13 mit geänderten Dämpfungskanälen 25, 26. Auf die gleiche Weise kann auch das Gummilager 14 getauscht werden oder ein anderes Innenteil 2 verwendet werden. Insbesondere durch den Einsatz unterschiedlicher Innenteile 2, elastomerer Dämpfungsglieder 6 und/oder Gummilager 14 sowie unterschiedlicher Außenhülsen 9 kann das Volumen und die Nachgiebigkeiten der axial und radial wirkenden Kammern 19, 20, 22 und 23 eingestellt werden, um unterschiedliche Lager mit unterschiedlichen Dämpfungseigenschaften zu schaffen.

### Bezugszeichenliste

- **1**: Buchsenlager
- **2**: Innenteil
- **3**: Bohrung
- **4**: Längsachse
- **5**: Vorsprung
- **6**: Elastomers Dämpfungsglied
- **7**: oberes Dämpfungsteil
- **8**: unteres Dämpfungsteil
- **9**: Außenhülse
- **10**: oberes Außenhülsenteil
- **11**: unters Außenhülsenteil
- **12**: Außenbuchse
- **13**: Kanalträger
- **14**: Gummilager
- **15**: innerer Stützring
- **16**: äußerer Stützring
- **17**: Trennebene
- **17'**: Kontaktzone
- **18**: Steg
- **19**: obere Kammer
- **20**: untere Kammer
- **21**: erstes Kammerpaar
- **22**: radiale Kammer
- **23**: radiale Kammer
- **24**: zweites Kammerpaar
- **25**: Erster Dämpfungskanal
- **26**: Zweiter Dämpfungskanal
- **27**: Zusatzelement
- **28**: Befestigungsplatte
- **29**: Verschraubung
- **30**: Bohrung
- **A**: Teilbereich
- **B**: Teilbereich

## Patentansprüche

1. Hydraulisch dämpfendes Buchsenlager (1), aufweisend:
- ein Innenteil (2) mit einer entlang einer Längsachse (4) verlaufenden Bohrung (3),
- eine das Innenteil (2) umgebende Außenhülse (9),
- ein zwischen dem Innenteil (2) und der Außenhülse (9) angeordnetes elastomeres Dämpfungsglied (6)
- zumindest zwei Kammerpaare (21, 24) mit jeweils zumindest zwei getrennten und mit einem hydraulischen Fluid gefüllten Kammern (19, 20; 22, 23) wobei
- die zwei Kammern (19, 20) eines ersten Kammerpaares (21) axial entlang der Längsachse (4) angeordnet sind
- die zwei Kammern (22, 23) eines zweiten Kammernpaares (24) radial zur Längsachse (4) angeordnet sind und in axialer Richtung der Längsachse (4) zwischen den zwei Kammern (19, 20) des ersten Kammerpaares (21) angeordnet sind
- einen Kanalträger (13), welcher die jeweils zwei Kammern (19, 20; 21,23) eines der Kammerpaare (21, 24) über jeweils zumindest einen im oder am Kanalträger (13) angeordneten Dämpfungskanal (25, 26) miteinander verbindet
- eine Außenbuchse (12), welche das Innenteil (2), das elastomere Dämpfungsglied (6), die Außenhülse (9), den Kanalträger (13) sowie die zumindest zwei Kammerpaare (21, 24) umschließt
**dadurch gekennzeichnet, dass**
- die Kammern (19, 20) des ersten Kammerpaares (21) und die Kammern (22, 23) des zweiten Kammerpaares (24) sich wenigstens in einem zur Längsachse (4) axialen Teilbereich (A, B) zumindest bereichsweise überdecken.

2. Hydraulisch dämpfendes Buchsenlager nach Anspruch 1.
**dadurch gekennzeichnet, dass**
der Kanalträger (13) zwischen der Außenhülse (9) und der Außenbuchse (12) angeordnet ist.

3. Hydraulisch dämpfendes Buchsenlager nach Anspruch 2,
**dadurch gekennzeichnet, dass**
der Kanalträger (13) zylindrisch ausgebildet ist und sich im wesentlichen über die gesamte zur Längsachse (4) axialen Ausdehnung der Außenbuchse (12) erstreckt.

4. Hydraulisch dämpfendes Buchsenlager nach einem der vorherigen Ansprüche,
**dadurch gekennzeichnet, dass**
die jeweils zwei Kammern (19, 20; 22, 23) der wenigstens zwei Kammerpaare (21, 24) zueinander symmetrisch ausgebildet und angeordnet sind.

5. Hydraulisch dämpfendes Buchsenlager nach einem der vorherigen Ansprüche,
**dadurch gekennzeichnet, dass**
die Außenhülse (9) in wenigstens einem Teilbereich (A, B) einen Abstand zu der Außenbuchse (12) oder zu dem Kanalträger (13) aufweist.

6. Hydraulisch dämpfendes Buchsenlager nach Anspruch 5,
**dadurch gekennzeichnet, dass**
die Außenhülse (9) im Bereich des von der Außenbuchse (12) beabstandeten Teilbereichs (A, B) mit der Außenbuchse (12) oder dem Kanalträger (13) über wenigstens einen Steg (18) miteinander in Kontakt ist, wobei der Steg (18) die Kammern (19, 20) des ersten Kammerpaares (21) voneinander trennt.

7. Hydraulisch dämpfendes Buchsenlager nach einem der vorherigen Ansprüche,
**dadurch gekennzeichnet, dass**
die Außenhülse (9) zweiteilig aus zwei Außenhülsenteilen (10, 11) gebildet ist.

8. Hydraulisch dämpfendes Buchsenlager nach Anspruch 7,
**dadurch gekennzeichnet, dass**
die beiden Teile der Außenhülse (10, 11) symmetrisch zueinander ausgebildet sind.

9. Hydraulisch dämpfendes Buchsenlager nach einem der vorherigen Ansprüche,
**dadurch gekennzeichnet, dass**
das Innenteil (2) zwei sich in radialer Richtung gegenüberliegende Vorsprünge (5) aufweist, welche in Richtung der Kammern (22, 23) des zweiten Kammerpaares (24) ausgerichtet sind.

10. Hydraulisch dämpfendes Buchsenlager nach einem der vorherigen Ansprüche,
**dadurch gekennzeichnet, dass**
das elastomere Dämpfungsglied (6) zweiteilig aus zwei elastomeren Dämpfungsteilen (7, 8) gebildet ist, wobei der Kontaktbereich der elastomeren Dämpfungsteilen (7, 8) als eine Trennungsebene (17) ausgebildet ist.

11. Hydraulisch dämpfendes Buchsenlager nach Anspruch 7 und 10,
**dadurch gekennzeichnet, dass**
die beiden Außenhülsenteile (10, 11) eine Kontaktzone (17') ausbilden, welche sich mit der Trennungsebene (17) der elastomeren Dämpfungsteile (7, 8) in einer gemeinsamen Ebene befindet.

12. Hydraulisch dämpfendes Buchsenlager nach einem der vorherigen Ansprüche,
**dadurch gekennzeichnet, dass**
die Außenhülse (9) zumindest in Teilbereichen eine feste Trennwand zwischen einer Kammer (19, 20) des ersten Kammerpaares (21) und einer Kammer (22, 23) des zweiten Kammerpaares (24) bildet.

13. Hydraulisch dämpfendes Buchsenlager nach Anspruch 6, 7, 10 oder 11,
**dadurch gekennzeichnet, dass**
der jeweilige Steg (18) als ein Zusatzelement (27) ausgebildet ist, welches die beiden Außenhülsenteile (10, 11) miteinander verbindet.

14. Hydraulisch dämpfendes Buchsenlager nach Anspruch 12,
**dadurch gekennzeichnet, dass**
das Zusatzelement (27) jeweils über eine kraft- oder formschlüssige Verbindung mit der Außenhülse (9) oder den beiden Außenhülsenteilen (10, 11) verbunden ist.

15. Hydraulisch dämpfendes Buchsenlager nach Anspruch 14,
**dadurch gekennzeichnet, dass**
die kraft- oder formschlüssige Verbindung als eine Verschraubung (29) ausgebildet ist.

## Claims

1. Hydraulically damping bush bearing (1), having:
- an inner part (2) with a hole (3) extending along a longitudinal axis (4)
- an outer sleeve (9) surrounding the inner part (2)
- an elastomeric damping member (6) arranged between the inner part (2) and the outer sleeve (9)
- at least two chamber pairs (21, 24), each having at least two separate chambers (19, 20; 22, 23) filled with a hydraulic fluid
- the two chambers (19, 20) of a first chamber pair (21) being arranged axially along the longitudinal axis (4)
- the two chambers (22, 23) of a second chamber pair (24) being arranged radially in relation to the longitudinal axis (4) and being arranged between the two chambers (19, 20) of the first chamber pair (21) in the axial direction of the longitudinal axis (4)
- a channel carrier (13) which connects the two chambers (19, 20; 21, 23) each of one of the chamber pairs (21, 24) to one another via at least one damping channel (25, 26) each, arranged in or on the channel carrier (13)
- an outer bush (12) surrounding the inner part (2), the elastomeric damping member (6), the outer sleeve (9), the channel carrier (13) as well as the at least two chamber pairs (21, 24)
**characterised in that**
- the chambers (19, 20) of the first chamber pair (21) and the chambers (22, 23) of the second chamber pair (24) overlap at least in some areas at least in a partial area (A, B) that is axial in relation to the longitudinal axis (4).

2. Hydraulically damping bush bearing according to Claim 1,
**characterised in that**
the channel carrier (13) is arranged between the outer sleeve (9) and the outer bush (12).

3. Hydraulically damping bush bearing according to Claim 2,
**characterised in that**
the channel carrier (13) has a cylindrical shape and extends essentially over the entire extension of the outer bush (12), which extension is axial in relation to the longitudinal axis (4).

4. Hydraulically damping bush bearing according to one of the preceding claims,
**characterised in that**
the two chambers (19, 20; 22, 23) each of the at least two chamber pairs (21, 24) are designed and arranged symmetrically to one another.

5. Hydraulically damping bush bearing according to one of the preceding claims,
**characterised in that**
the outer sleeve (9) is at a distance from the outer bush (12) or from the channel carrier (13) in at least one partial area (A, B).

6. Hydraulically damping bush bearing according to Claim 5,
**characterised in that**
in the area of the partial area (A, B) at a distance from the outer bush (12), the outer sleeve (9) is in contact with the outer bush (12) or with the channel carrier (13) via at least one web (18), the web (18) separating the chambers (19, 20) of the first chamber pair (21) from one another.

7. Hydraulically damping bush bearing according to one of the preceding claims,
**characterised in that**
the outer sleeve (9) has a two-part design comprising two outer sleeve parts (10, 11).

8. Hydraulically damping bush bearing according to Claim 7,
**characterised in that**
the two parts of the outer sleeve (10, 11) are designed symmetrically to one another.

9. Hydraulically damping bush bearing according to one of the preceding claims,
**characterised in that**
the inner part (2) has two projections (5), which are located opposite each other in the radial direction and are oriented in the direction of the chambers (22, 23) of the second chamber pair (24).

10. Hydraulically damping bush bearing according to one of the preceding claims,
**characterised in that**
the elastomeric damping member (6) has a two-part design comprising two elastomeric damping parts (7, 8), the contact area of the elastomeric damping parts (7, 8) being designed as a parting plane (17).

11. Hydraulically damping bush bearing according to Claim 7 and 10,
**characterised in that**
the two outer sleeve parts (10, 11) form a contact zone (17'), which is located in a common plane with the parting plane (17) of the elastomeric damping parts (7, 8).

12. Hydraulically damping bush bearing according to one of the preceding claims,
**characterised in that**
the outer sleeve (9) forms a fixed partition between a chamber (19, 20) of the first chamber pair (21) and a chamber (22, 23) of the second chamber pair (24) at least in partial areas.

13. Hydraulically damping bush bearing according to Claim 6, 7, 10 or 11,
**characterised in that**
the respective web (18) is designed as an additional element (27), which connects the two outer sleeve parts (10, 11) to one another.

14. Hydraulically damping bush bearing according to Claim 12,
**characterised in that**
the additional element (27) is in each case connected to the outer sleeve (9) or the two outer sleeve parts (10, 11) via a non-positive or positive-locking connection.

15. Hydraulically damping bush bearing according to Claim 14,
**characterised in that**
the non-positive or positive-locking connection is designed as a screw connection (29).

## Revendications

1. Coussinet (1) pour amortissement hydraulique comportant :
- une partie intérieure (2) avec un alésage (3) s'étendant le long d'un axe longitudinal (4),
- une douille extérieure (9) entourant la partie intérieure (2),
- un organe d'amortissement (6) élastomère disposé entre la partie intérieure (2) et la douille extérieure (9),
- au moins deux paires de chambres (21, 24) avec chacune au moins deux chambres (19, 20 ; 22, 23) remplies d'un fluide hydraulique,
- les deux chambres (19, 20) d'une première paire de chambres (21) étant disposées axialement le long de l'axe longitudinal (4),
- les deux chambres (22, 23) d'une deuxième paire de chambres (24) étant disposées radialement par rapport à l'axe longitudinal (4) et étant disposées dans la direction axiale de l'axe longitudinal (4) entre les deux chambres (19, 20) de la première paire de chambres (21),
- un support de canal (13) qui relie entre elles les deux chambres (19, 20 ; 21, 23) de l'une des paires de chambres (21, 24), respectivement par au moins un canal d'amortissement (25, 26) disposé dans ou sur le support de canal (13),
- une chemise extérieure (12) qui enferme la partie intérieure (2), l'organe d'amortissement élastomère (6), la douille extérieure (9), le support de canal (13) ainsi que les au moins deux paires de chambres (21, 24),
**caractérisé en ce que**
- les chambres (19, 20) de la première paire de chambres (21) et les chambres (22, 23) de la deuxième paire de chambres (24) se recouvrent au moins en partie, au moins dans une zone partielle (A, B) axiale par rapport à l'axe longitudinal (4).

2. Coussinet pour amortissement hydraulique selon la revendication 1,
**caractérisé en ce que**
le support de canal (13) est disposé entre la douille extérieure (9) et la chemise extérieure (12).

3. Coussinet pour amortissement hydraulique selon la revendication 2,
**caractérisé en ce que**
le support de canal (13) est réalisé cylindrique et s'étend sensiblement sur toute l'étendue axiale, par rapport à l'axe longitudinal (4), de la chemise extérieure (12).

4. Coussinet pour amortissement hydraulique selon l'une quelconque des revendications précédentes,
**caractérisé en ce que**
les deux chambres (19, 20 ; 22, 23) des au moins deux paires de chambres (21, 24) sont réalisées et disposées de manière symétrique l'une par rapport à l'autre.

5. Coussinet pour amortissement hydraulique selon l'une quelconque des revendications précédentes,
**caractérisé en ce que**
la douille extérieure (9) présente, dans au moins une zone partielle (A, B), une distance par rapport à la chemise extérieure (12) ou par rapport au support de canal (13).

6. Coussinet pour amortissement hydraulique selon la revendication 5,
**caractérisé en ce que**
la douille extérieure (9) est en contact, dans la région de la zone partielle (A, B) espacée de la chemise extérieure (12), avec la chemise extérieure (12) ou avec le support de canal (13), par au moins une cloison (18), la cloison (18) séparant l'une de l'autre les chambres (19, 20) de la première paire de chambres (21).

7. Coussinet pour amortissement hydraulique selon l'une quelconque des revendications précédentes,
**caractérisé en ce que**
la douille extérieure (9) est en deux parties, c'est-à-dire formée de deux parties de douille extérieure (10, 11).

8. Coussinet pour amortissement hydraulique selon la revendication 7,
**caractérisé en ce que**
les deux parties de la douille extérieure (10, 11) sont réalisées de manière symétrique l'une par rapport à l'autre.

9. Coussinet pour amortissement hydraulique selon l'une quelconque des revendications précédentes,
**caractérisé en ce que**
la partie intérieure (2) présente deux saillies (5) opposées dans la direction radiale, qui sont orientées dans la direction des chambres (22, 23) de la deuxième paire de chambres (24).

10. Coussinet pour amortissement hydraulique selon l'une quelconque des revendications précédentes,
**caractérisé en ce que**
l'organe d'amortissement élastomère (6) est en deux parties, c'est-à-dire formé de deux parties d'amortissement élastomères (7, 8), la zone de contact des parties d'amortissement élastomères (7, 8) étant réalisée sous la forme d'un plan de séparation (17).

11. Coussinet pour amortissement hydraulique selon les revendications 7 et 10,
**caractérisé en ce que**
les deux parties de douille extérieure (10, 11) réalisent une zone de contact (17') qui se trouve dans un plan commun avec le plan de séparation (17) des parties d'amortissement élastomères (7, 8).

12. Coussinet pour amortissement hydraulique selon l'une quelconque des revendications précédentes,
**caractérisé en ce que**
la douille extérieure (9) forme, au moins dans des zones partielles, une cloison fixe entre une chambre (19, 20) de la première paire de chambres (21) et une chambre (22, 23) de la deuxième paire de chambres (24).

13. Coussinet pour amortissement hydraulique selon les revendications 6, 7, 10 ou 11,
**caractérisé en ce que**
la cloison (18) respective est réalisée sous la forme d'un élément supplémentaire (27) qui relie entre elles les deux parties de douille extérieure (10, 11).

14. Coussinet pour amortissement hydraulique selon la revendication 12,
**caractérisé en ce que**
l'élément supplémentaire (27) est relié par une liaison à force ou par complémentarité de formes respectivement avec la douille extérieure (9) ou les deux parties de douille extérieure (10, 11).

15. Coussinet pour amortissement hydraulique selon la revendication 14,
**caractérisé en ce que**
la liaison à force ou par complémentarité de formes est réalisée sous la forme d'un vissage (29).
